# EUROPÄISCHE PATENTSCHRIFT

(11) **EP 1 900 337 B1**
(45) Veröffentlichungstag und Bekanntmachung des Hinweises auf die Patenterteilung: **12.09.2012**
(21) Anmeldenummer: 07122136.0
(22) Anmeldetag: 02.07.2003
(51) Int. Cl.: A61C 1/05, A61C 1/18

(54) **Medizinisches oder dentalmedizinisches Handstück mit einem hinteren und einem vorderen Handstückabschnitt**
Medical or dental tool holder with a front and rear tool holder apron
Pièce à main médicale ou dentaire dotée d'une section arrière et avant

(30) Priorität: 02.07.2002 DE 10229650
(43) Veröffentlichungstag der Anmeldung: 19.03.2008
(62) Teilanmeldung aus: 03015031.2
(73) Patentinhaber: Kaltenbach & Voigt GmbH, 88400 Biberach (DE)
(72) Erfinder: Kuhn, Bernhard, 88400, Biberach (DE)
(74) Vertreter: Thun, Clemens

(56) Entgegenhaltungen:
- CH-A5- 631 340
- DE-A1- 2 802 325
- DE-C1- 3 433 877
- GB-A- 1 335 780

## Beschreibung

Die Erfindung bezieht sich auf ein medizinisches oder dentalmedizinisches Handstück nach dem Oberbegriff des Anspruches 1.

Ein Handstück der verliegenden Art ist z.B. in der DE 28 02 325 C2 beschrieben. Bei diesem vorbekannten Handstück mit einem länglichen Griffteil oder Schaft in Form eines sog. Winkelstücks besteht das Handstück aus einem hinteren Handstückabschnitt und einem vorderen Handstückabschnitt, das bezüglich dem hinteren Handstückabschnitt abgewinkelt angeordnet ist. Die Handstückabschnitte sind durch eine Steckkupplung mit einem vom hinteren Handstückabschnitt vorragenden Steckzapfen und einer am hinteren Ende des vorderen Handstückabschnitts ausmündenden und den Steckzapfen aufnehmenden Steckausnehmung miteinander verbunden und durch eine Verrastungsvorrichtung axial aneinander fixiert. Der Steckzapfen weist eine Steckzapfenbasis auf, auf der eine Ringhülse fest aufgesetzt ist, von der einander diametral gegenüberliegend zwei starre Rastarme vorragen, die in ihren freien Endbereichen innenseitig jeweils eine Rastkalotte aufweisen. Der vordere Handstückabschnitt ist mit seiner Steckausnehmung auf die Ringhülse aufgeschoben, und er weist im Grundbereich der Steckausnehmung zwei diametral gegenüberliegend angeordnete, sich nach hinten erstreckende Federarme mit Rastnasen auf, die in die Kalottenausnehmungen eingerastet sind. Koaxial durch die Steckkupplung erstreckt sich eine Innenhülse, in der ein Antriebswellenabschnitt drehbar gelagert ist, und die in die hülsenförmige Steckzapfenbasis eingepresst und somit axial an der Steckzapfenbasis fixiert ist.

In der DE 34 33 877 C1 ist ein Handstück mit einem winkelförmigen Griffteil beschrieben, dessen vorderer abgewinkelter Griffteilschenkel aus einem hinteren and einen vorderen Handstückabschnitt besteht, von denen der hintere Handstückabschnitt eine vorderseitig offene Steckausnehmung aufweist, in die der vordere Handstückabschnitt mit einem nach hinten abstehenden Steckzapfen einsteckbar und durch eine Verrieglungsvorrichtung axial verriegelbar ist. Die Verriegelungsvorrichtung weist eine in der Wandung der Steckausnehmung angeordnete Rastkugel auf, die durch ein Drehen einer auf dem hinteren Handstückabschnitt drehbar gelagerten Drehhülse in eine Rastausnehmung im Steckzapfen gedrängt wird und hierdurch den Steckzapfen und somit auch den gesamten vorderen Handstückabschnitt axial fixiert. Zum Lösten ist die Drehhülse gegen die Kraft einer Rückstellfeder in die andere Umfangsrichtung zu drehen, wodurch die Rastkugel freigegeben wird und der vordere Handstückabschnitt mit dem Steckzapfen aus dem hinteren Handstückabschnitt herausgezogen werden kann.

Der Erfindung liegt die Aufgabe zugrunde, ein Handstück der angegebenen Art hinsichtlich der Verbindung zwischen dem hinteren und dem vorderen Handstückabschnitt zu verbessern. Diese Verbesserung soll sich nicht nur auf die Verbindung zwischen den Handstückabschnitten, sondern auch auf ein Einsatzteil in Form einer Lagerhülse beziehen, das den hinteren und/oder vorderen Handstückabschnitt axial durchsetzt.

Diese Aufgabe wird durch die Merkmale des Anspruches 1 gelöst. Vorteilhafte Weiterbildungen der Erfindung sind in den Unteransprüchen beschrieben.

Beim erfindungsgemäßen Handstück nach Anspruch 1 dient die Verrastungsvorrichtung nicht nur dazu, den hinteren Handstückabschnitt und den vorderen Handstückabschnitt miteinander zu verbinden, sondern auch dazu, eine in eine passende Steckausnehmung des hinteren und/oder vorderen Handstückabschnitts eingesteckte Lagerhülse des Handstücks axial zu fixieren, so dass es zur axialen Fixierung de Lagerhülsekeiner weiteren Fixiervorrichtung bedarf. Insbesondere bedarf es keiner Presspassung zur axialen Fixierung de Lagerhülse wie es beim Stand der Technik der Fall ist. Zur Verbindung der Lagerhülse mit dem vorderen Handstückabschnitt kann ebenfalls eine passende Steckausnehmung im vorderen Handstückabschnitt angeordnet sein, in die das hülsenförmige Einsatzteil mit seinem vorderen Ende eingesetzt bzw. einsetzbar ist, so dass der vordere Handstückabschnitt auf der Lagerhülse sitzt. Die axiale Fixierung des vorderen Handstückabschnitts ist dabei durch die Verrastungsvorrichtung gewährleistet, die den vorderen mit dem hinteren Handstückäbschnitt verbindet. Der vordere Handstückabschnitt ist vorzugsweise durch den Kopf des Handstücks gebildet, von dem sich ein Steckverbindungsteil nach hinten erstreckt und mit einem Steckverbindungsteil des hinteren Handstückabschnitts verbunden ist.

Bei dem Einsatzteil handelt es sich wie bereits erwähnt um eine Einsatzhülse, durch die sich 5 eine Antriebswelle erstreckt und durch Drehlager im vorderen und hinteren Bereich der Einsatzhülse gelagert ist, insbesondere durch Wälzlager, deren Außenringe in passenden endseitigen Lagerbohrungen der Einsatzhülse sitzen. Die Fassungen der Steckausnehmungen für die Lagerhülse weisen ein geringes Bewegungsspiel auf, so dass die Lagerhülse handhabungsfreundlich in die Steckausnehmungen einsteckbar und 10 montierbar ist. Vorzugweise sind die Steckverbindungsteite dabei durch einen vom hinteren Handstückabschnitt nach vorne erstreckenden Hülsenansatz und einen sich vom vorderen Handstück nach hinten erstreckenenden Hülsenabschnitt gebildet und sind beispielsweise nebeneinander angeordnet. Hierdurch ist eine einfache Bauweise sowie Montage bzw. Demontage vorgegeben, die sich auch preiswert herstellen und einfach und schnell montieren bzw. demontieren lässt.

Für eine funktionsfähige Verrastung reicht es aus, wenn eine Verrastungsvorrichtung mit einem Verrastungselement einseitig bzw. exzentrisch neben der Einsatzhülse angeordnet ist. Vorzugsweise sind zwei Verrastungsvorrichtungen jeweils mit einem Verrastungselement zu beiden Seiten der Einsatzhülse angeordnet, wobei das wenigstens eine Verrastungselement die Verrastungsfunktion sowohl zwischen dem hinteren und vorderen Handstückabschnitt als auch zwischen dem hinteren und/oder dem vorderen Handstückabschnitt und der Einsatzhülse erfüllt. Dabei ist es aus weiteren Vereinfachungs- und Stabilitätsgründea vorteilhaft, wenn die Verrastung zwischen dem hinteren Handstückabschnitt oder dem vorderen Handstückabschnitt und dem Einsatzteil bleibend ist, d. h., während einer Entrastung zwischen dem hinteren und dem vorderen Handstückabschnitt nicht löst, sondern seine Verrastung beibehält. Hierdurch bleibt die mechanische Verbindung des Einsatzteils aufrechterhalten.

Bei einem vorliegenden Handstück ist insbesondere im vorderen Bereich seines Schaftes eine möglichst geringe Querschnittsgröße gefordert, um auch an beengten Behandlungs- bzw. Operationsstellen die Sicht auf die Behandlungsstelle möglichst wenig zu beeinträchtigen. Dies gilt insbesondere für ein dentalmedizinisches Handstück, da der Mundraum eines Patienten eine beengte Behandlungsstelle ist, deren Zugänglichkeit durch die Mundöffnung zusätzlich erschwert wird. Andererseits darf die Querschnittsgröße des vorderen Endbereichs des Schaftes nicht so klein sein, dass Stabilitätsprobleme entstehen, und zwar insbesondere dann, wenn es sich um ein Handstück handelt, in dem eine Antriebswelle drehbar gelagert ist.

In einer vorteilhaften Ausgestaltung ist beispielsweise der Verrastungsarm der Verrastungsvorrichtung mit seinem hinteren Ende am hinteren Handstückabschnitt angeordnet und er erstreckt sich von hinten nach vorne. Diese Ausgestaltung ermöglicht aus folgenden Gründen eine im Querschnitt kleine und stabile Bauweise.

Dieser erfindungsgemäßen Ausgestaltung liegt die Erkenntnis zugrunde, dass die radiale Baugröße des wenigstens einen Verrastungsarms in Richtung nach vorne konvergent ausgebildet werden kann, ohne dass die erforderliche Stabilität des Verrastungsanns beeinträchtigt wird. Dies liegt darin begründet, dass der vorzugsweise flache, stabförmige Verrastungsarm in semem Basisbereich am stabilsten sein muss und mit größer werdendem Abstand nach vorne vom Basisbereich weniger stabil ausgebildet werden kann, weil aufgrund des sich nach vorne verringernden Hebelarmes bei einer radialen Belastung das auf den Verrastungsarm wirksame Drehmoment sich mit größer werdendem Abstand vom Basisbereich verringert. Diese nach vorne verringerbare Baugröße kommt der Querschnittsgröße des Handstücks deshalb zugute, weil diese nach vorne verringerte Querschnittsgröße des Federarms der an sich bekannten nach vom verringerten Querschnittsgröße des Handstücks zugute kommt und deshalb die Querschnittsgröße insgesamt verringerbar ist. Diese Ausgestaltung kommt insbesondere einem dentalmedizinischen Handstück zugute, weil aufgrund des beengten Arbeitsraumes im Mundbereich eines Patienten jede auch noch so kleine Verringerung der Baugröße von Bedeutung ist, insbesondere im vorderen Bereich des Handstücks, was durch die natürliche Begrenzung der Mundöffnung des Patienten bedingt ist.

Vorteilhafterweise ist das Verrastungselement durch einen Zapfen oder eine Kugel gebildet, welches raumsparend in einem Loch des zugehörigen Steckverbindungsteils, insbesondere des vorderen Hülsenansatzes sitzt.

Die raumsparende Wirkung unterstützend ist beispielsweise der Zapfen oder die Kugel so angeordnet, dass sie den Hülseneinsatz überragt und in eine Ausnehmung des hülsenförmigen Einsatzteils einfasst.

Und um eine stärkere axiale Fixierung sowohl des Einsatzteils als auch der Handstückverbindung zu erreichen sind in weiterer Ausgestaltung mehrere einander gegenüberliegende Rastvorrichtungen vorgesehen.

Nachfolgend werden vorteilhafte Ausgestaltungen der Erfindung anhand von bevorzugten Ausführungsbeispielen und zugehörigen Zeichnungen näher erläutert. Es zeigen
- Fig. 1: ein erfindungsgemäßes Behandlungsinstrument mit einem Handstück und einem Abschlussteil in der Seitenansicht, teilweise axial geschnitten;
- Fig. 2: das Handstück in der Untersicht in einem vormontierten Zustand;
- Fig. 3: einen vorderen Bereich des Handstücks in teilweise geschnittener Draufsicht;
- Fig. 4: den Schnitt III-III in Fig. 3;
- Fig. 5: eine in das hintere Ende des Handstücks koaxial eingesetzte Einsatzbuchse in vergrößerter Darstellung und als Einzelteil;
- Fig. 6: einen Reinigungseinsatz in vergrößerter Seitenansicht, der von hinten achsparallel in ein Aufnahmeloch der Einsatzbuchse einsetzbar ist;
- Fig. 7: den Reinigungseinsatz nach Fig. 6 im axialen Schnitt;
- Fig. 8: den Reinigungseinsatz nach Fig. 6 in der Draufsicht und im axialen Schnitt.

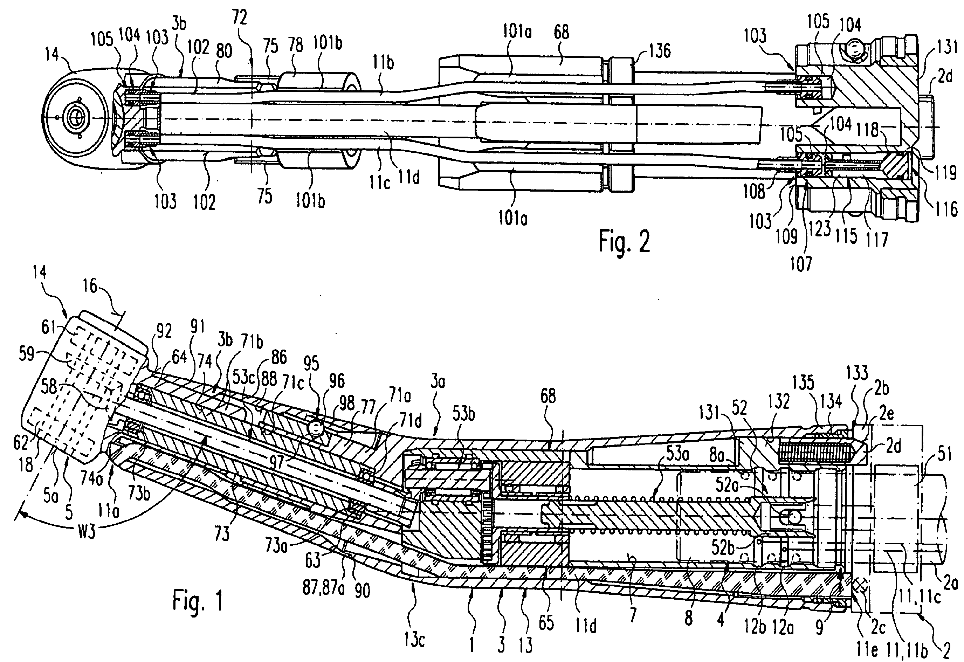

Das in Fig. 1 in seiner Gesamtheit mit 1 bezeichnete Behandlungsinstrument besteht aus einem hinteren Instrumententeil, nämlich einem sogenannten Anschlussteil 2, und einem vorderen Instrumententeil, nämlich dem sogenannten Handstück 3, die durch eine Kupplung 4, insbesondere eine Steckkupplung, vorzugsweise eine Steck/Dreh-Kupplung, lösbar miteinander verbunden sind. Beim vorliegenden Ausführungsbeispiel ist am vorderen Ende des Behandlungsinstruments 1 eine Haltevorrichtung 5 mit einer vorderen oder nicht dargestellten seitlichen Einstecköffnung 5a für ein nicht dargestelltes Werkzeug angeordnet, wobei das Werkzeug seitlich oder nach vorne abstehen kann. Das Handstück 3 kann sich gerade (nicht dargestellt) oder zur Einstecköffnung 5a abgewandten Seite hin gekrümmt oder winkelförmig erstrecken. Die Steck/Dreh-Kupplung wird durch eine im Querschnitt runde Kupplungsausnehmung 7 und einen darin mit geringem Bewegungsspiel einsteckbaren Kupplungszapfen 8 gebildet. Beim vorliegenden Ausführungsbeispiel ist die Kupplungsausnehmung 7 am hinteren Ende des Handstücks 3 angeordnet, und der im wesentlichen zylindrische Kupplungszapfen 8 erstreckt sich vom Anschlussteil 2 nach vorne. Im gekuppelten Zustand sind die Kupplungsausnehmung 7 und der Kupplungszapfen 8 durch eine Verrastungsvorrichtung 9 lösbar miteinander verrastet. Diese weist ein Verrastungselement auf, das in dem einen Kupplungsteil radial beweglich gelagert und durch eine Federkraft in eine die Teilungsfuge durchsetzende Verrastungsstellung vorgespannt ist, in der das Verrastungselement in eine Ringnut im anderen Kupplungsteil einfasst. Eine solche Verrastungsvorrichtung 9 verrastet beim Kuppeln selbsttätig, und sie ist beim Entkuppeln durch eine manuelle axiale Zugkraftausübung überdrückbar, wobei das Verrastungselement selbsttätig in seine Freigabestellung verdrängt wird.

Das Anschlussteil 2 ist mit einer flexiblen Versorgungsleitung 2a verbunden, die mit einem nicht dargestellten Steuergerät verbunden ist. Das Handstück 3 ist vorzugsweise auf dem Kupplungszapfen 8 frei drehbar gelagert, wodurch die Handhabbarkeit verbessert wird. Durch die Steck/Dreh-Kupplung 4 erstreckt sich wenigstens eine Medienleitung 11 für ein Behandlungs- oder Antriebsmedium, z. B. Wasser, Druckluft oder ein Wasser/Luft-Gemisch (Spray). Die Medienleitung 11 kann sich axial durch eine radiale Teilungsfuge (nicht dargestellt) oder Z-förmig durch eine hohlzylindrische Teilungsfuge zwischen der Kupplungsausnehmung 7 und dem Kupplungszapfen 8 erstrecken, wobei die Medienleitung 11 die Teilungsfuge im Bereich einer Ringnut 12a bzw. 12b im Kupplungszapfen 8 oder in der Kupplungsausnehmung 7 durchsetzt, so dass in jeder Drehstellung der Mediendurchgang gewährleistet ist. Beiderseits vom Durchgang ist die Teilungsfuge durch einen Dichtring 8a abgedichtet, der in einer Ringnut in der Wandung der Kupplungsausnehmung 7 oder in der Mantelfläche des Kupplungszapfens 8 angeordnet sein kann. Hierdurch ist eine freie Drehbarkeit um 360 ° und mehr gewährleistet. Die Medienleitung 11 erstreckt sich vom hinteren Ende des Behandlungsinstruments 1 zu dessen vorderem Endbereich, wobei sie teilweise als Kanal im Instrumentenkörper oder als Schlauch- bzw. Rohrleitung verlaufen kann. Die Medienleitung 11 mündet im vorderen Endbereich des Behandlungsinstruments 1 aus diesem aus, wobei diese Mündungsöffnung 11a auf die Behandlungsstelle bzw. auf die Spitze des Werkzeugs gerichtet ist.

Beim vorliegenden Ausführungsbeispiel sind zwei Medienleitungen 11b, 11c für Druckluft und Wasser oder ein Wasser/Luft-Gemisch (Spray) vorgesehen, die sich zu beiden Seiten eines Lichtleiters 11d erstrecken. Der Lichtleiter 11d erstreckt sich etwa achsparallel an bzw. in der den Kupplungszapfen 8 umgebenden Wandung des Handstücks 3, wobei sein hinteres Ende eine Licht-Einstrahlöffnung 11e an der rückseitigen Stirnfläche des Handstücks 3 bildet. Das vordere Ende des Lichtleiters endet im Bereich der Mündungsöffnung 11a der Medienleitungen 11b, 11c, vorzugsweise zwischen den Mündungsöffnungen 11a. Am Anschlussteil 2 ist vorderseitig, hier auf den Kupplungszapfen 8, ein Drehring 2b drehbar gelagert, in dem in einer der Einstrahlöffnung 11e vorgeordneten Position eine Lampe 2c angeordnet ist, die durch Schleifringkontakte mit einem sich durch die Versorgungsleitung 2a erstreckenden Stromkreislauf (nicht dargestellt) verbunden ist. Die passende Position der Lampe 2c ist durch eine Nockenverbindung zwischen dem Handstück 3 und dem Drehring 2b gewährleistet. Ein zugehöriger Nocken 2d ist bezüglich dem Lichtleiter 11d in Umfangsrichtung versetzt am Handstück 3 angeordnet, vorzugsweise zwischen einer abstehenden Position und einer in Aufnahmeloch des Handstücks 3 versengten Position verschiebbar und durch eine Feder in die abstehende Position vorgespannt, so dass er beim Kuppeln und Drehen des Handstücks 3 selbsttätig in eine Rastausnehmung 2e des Drehrings 2d einrasten kann.

Das Handstück 1 weist somit einen Schaft 13 auf, der einstückig ausgebildet sein kann oder aus einem hinteren oder vorderen Handstückabschnitt 3a, 3b bestehen kann, die am Beginn des Bogens oder im Bereich der Scheitelstelle 13c des Winkels oder im Bereich des vorderen Handstückabschnitts 3b lösbar miteinander verbunden sind. Am vorderen Ende des Schaftes 13 befindet sich ein verdickter Kopf 14, in dem eine Aufnahmehülse 18 drehbar gelagert ist, in deren Einstecköffnung 5a das Werkzeug mit seinem Schaft einsteckbar und in an sich bekannter Weise durch eine Fixiervorrichtung lösbar fixierbar ist.

Bei diesem Behandlungsinstrument 1 ist ein Antriebsmotor 51, z.B. ein Elektromotor, im strichpunktiert dargestellten Anschlussteil 2 angeordnet und durch eine Antriebswelle bzw. einen Antriebswellenzug 53 mit wenigstens zwei, im Scheitelbereich druckfest miteinander verbundenen Antriebswellenabschnitten mit der Aufnahmehülse 18 antriebsmäßig verbunden. Im Bereich der Steckkupplung 4 weist der Antriebswellenzug 53 eine Steckkupplung 52 mit zwei formschlüssig miteinander korrespondierenden Steckkupplungselementen 52a, 52b auf, wodurch beim Kuppeln und Entkuppeln der Steckkupplung 4 zugleich ein Kuppeln und Entkuppeln der Steckkupplung 52 möglich ist.

Ein im hinteren Handstückabschnitt 3a des Handstücks 3 angeordneter Antriebswellenabschnitt 53a erstreckt sich bis in den Anfangsbereich der Krümmung oder in den Scheitelbereich des abgewinkelten Schaftes 13, wobei sein vorderes Ende durch einen sich im wesentlichen nur in der Krümmung oder Abwicklung oder im Scheitelbereich z. B. axial erstreckenden zweiten Antriebswellenabschnitt 53b antriebsmäßig mit einem dritten Antriebswellenabschnitt 53c verbunden sein kann, der sich im vorderen Handstückabschnitt 3b bis zur Aufnahmehülse 18 erstreckt und antriebsmäßig mit dieser verbunden ist. Der Antriebswellenabschnitt 53a ist durch die Steckkupplung 52 mit der Motorwelle des Antriebsmotors 51 verbunden. Zur Verbindung der Antriebswellenabschnitte 53a, 53b, 53c ist jeweils ein Zahnradgetriebe vorgesehen.

Die Antriebsverbindung zwischen dem dritten Antriebswellenabschnitt 53c und der Aufnahmehülse 18 ist durch ein Winkelzahnradgetriebe mit einem Kegelzahnrad 58 am vorderen Ende des dritten Antriebswellenabschnitts 53c und einem Kegelzahnrad 59 auf der Aufnahmehülse 18 gebildet. Der Zahneingriff zwischen dem Kegelzahnrädern 58, 59 ist bezüglich des dritten Antriebswellenabschnitts 53c auf dessen der Einstecköffnung 5a abgewandten Seite angeordnet. Hierdurch wird die Aufnahmehülse 18 in der gleichen Drehrichtung angetrieben, wie der erste Antriebswellenabschnitt 53a. Die Aufnahmehülse 18 ist mittels zwei Wälzlagern 61, 62 im Kopf 14 drehbar gelagert, die einen längs der Drehachse 16 gerichteten Abstand voneinander aufweisen, der größer ist als das Kegelzahnrad 58, so dass letzteres dazwischen angeordnet werden kann, einschließlich dem Kegelrad 59, das auf der der Einstecköffnung 5a abgewandten Seite des Kegelrades 58 und zugleich auf der der Einstecköffnung 5a zugewandten Seite des Wälzlagers 61 angeordnet ist, das der Einstecköffnung 5a weiter entfernt angeordnet ist als das andere Wälzlager 62. Zur Drehlagerung des dritten Antriebswellenabschnitts 53c ist jeweils ein Wälzlager 63, 64 auf den Endbereichen dieses Antriebswellenabschnitts 53c angeordnet, deren Außenringe in einem jeweils passenden Längsloch des Handstückabschnitts 3b sitzen und gelagert sind.

Die Ausgestaltung des Zahnrads 54 als Hohlrad ermöglicht bei radial kleiner Bauweise eine verhältnismäßig große Übersetzung der Drehzahl zwischen dem ersten und dem zweiten Antriebswellenabschnitt 53a, 53b.

Der in Fig. 1 zwischen der Mittelachse des vorderen Handstückabschnitts 3b und der Drehachse 16 der Aufnahmehülse 18 eingeschlossene Winkel W3 beträgt mehr als 90°, vorzugsweise im wesentlichen 100°. Eine solche Ausgestaltung ist unter Berücksichtigung der Anatomie im Mundraum eines Patienten besonders günstig.

Der vordere und der hintere Handstückabschnitt 3a, 3b sind durch eine Steckverbindung 71 mit einem Steckzapfen 71a und eine ihn mit geringen Bewegungsspiel aufnehmendes Steckloch 71c und eine Verrastungsvorrichtung 72 zur gegenseitigen Verrastung in der zusammengesteckten Position miteinander lösbar verbunden. Beim Ausführungsbeispiel erstreckt sich der Steckzapfen 71a vom vorderen Handstückabschnitt 3b nach hinten, und die Steckausnehmung 71c mündet am vorderen Ende des hinteren Handstückabschnitts 3a nach vorne aus, wobei beide Steckverbindungsteile vorzugsweise zylindrisch bzw. hohlzylindrisch ausgebildet sind und der Steckzapfen 71a mit geringem Bewegungsspiel in die Steckausnehmung 71c passt. Der Steckzapfen 71a ist durch eine vorzugsweise hohlzylindrische Lagerhülse 73 gebildet, die mit geringem Bewegungsspiel in einem Hülsenloch 74 entsprechender Größe und Form im vorderen Handstückabschnitt 3b sitzt, wobei sie im Hülsenloch 74 auch fest eingepresst sein kann. Durch die Lagerhülse 73 erstreckt sich mit Bewegungsspiel der vordere bzw. dritte Antriebswellenabschnitt 53c. Vorzugsweise sind die beiden Lager 63, 64 des Antriebswellenabschnitts 53c in Lagerausnehmungen in den Endbereichen der Lagerhülse 73 aufgenommen und gelagert. Dies gilt beim vorliegenden Ausführungsbeispiel für die Außenringe der Wälzlager 63, 64, die in endseitigen Stufenausnehmungen 73a, 73b der Lagerhülse 73 sitzen. Wenn die Lager durch Gleitlager gebildet sind, können sie jeweils durch einen Lagerring gebildet sein, der in der zugehöriger Lagerausnehmung 73a, 73b sitzt und in dem der Antriebswellen 53c mit geringem Bewegungsspiel drehbar gelagert ist.

Beim Ausführungsbeispiel ist die Steckausnehmung 71c durch eine nach vorne gerichtete Locherweiterung gebildet, an deren Stufenfläche 71d das hintere Ende der Lagerhülse 73 und der Außenring des Wälzlagers 63 anliegen und dadurch in Richtung nach hinten axial begrenzt sein kann bzw. können. In Richtung nach vorne kann der Lagerring bzw. Außenring des Wälzlagers 63 durch die Schulterfläche der hinteren Lagerausnehmung 73a begrenzt sein. In gleicher Weise können auch am vorderen Ende der Lagerhülse 73 diese und/oder der Lagerring bzw. der Außenring des Wälzlagers 64 an einer Stufenfläche 74a des Hülsenaufnahmelochs 74 und/oder der Lagerausnehmung 73b begrenzt sein. Zur axialen Fixierung des Antriebswellenabschnitts 53c an den Lagerringen bzw. Innenringen der Wälzlager 63, 64 könnten die auf den Antriebswellenabschnitt 53c fest aufgesetzten Zahnräder bzw. Kegelzahnräder dienen, wie es aus Fig. 1 zu entnehmen ist.

Die Verrastungsvorrichtung 72 weist wenigstens einen sich etwa achsparallel von dem einen Steckverbindungsteil der Steckverbindung 71 erstreckenden Verrastungsarm 75 auf, der quer zur Längsachse des Schaftabschnitts elastisch ausbiegbar ist und in seinem freien Endbereich mit einem Verrastungselement 76 verrastet ist, das an dem anderen Steckverbindungsteil angeordnet ist. Beim Ausführungsbeispiel erstreckt sich der Verrastungsarm 75 vom dem hinteren Handstückabschnitt 3a zugeordneten Steckverbindungsteil nach vorne, hier von einem vorderen Hülsenansatz 77, der vom hinteren Handstückabschnitt 3a vorragt. Dabei kann der Verrastungsarm 75 von einem Basisring 78 abstehen, der auf dem zugehörigen Steckverbindungsteil, hier auf dem hinteren Hülsenansatz 77 sitzt, vorzugsweise in einer endseitigen stufenförmigen Ringausnehmung 79, an deren Stufenfläche der Basisring 78 anliegen kann und dadurch in der einen axialen Richtung begrenzt ist. Zur Fixierung des Basisrings 78 kann dieser mit den ihn tragenden einen Steckverbindungsteil fest verbunden, z. B. verklebt, sein oder der Basisring 78 kann auch mit einem Presssitz auf dem Steckverbindungsteil fest angeordnet sein. Beim Ausführungsbeispiel ist die Dicke des Verrastungsarms 75 bezüglich der Dicke des Basisrings 78 wenigstens außen verjüngt, vorzugsweise beidseitig verjüngt, hier stufenförmig nach innen verjüngt.

Das Verrastungselement 76 kann durch einen Verrastungsvorsprung gebildet sein, der vom anderen Steckverbindungsteil radial nach außen vorsteht und vom Verrastungsarm 75 übergriffen und hintergriffen wird. Hierzu kann im vorderen Endbereich des Verrastungsarms 75 eine Verrastungsnase angeordnet sein, die vom Verrastungsarm 75 radial nach innen absteht. Beim Ausführungsbeispiel ist die Verrastungsnase durch eine Verrastungsausnehmung 81 in der Innenseite des Verrastungsarms 75 gebildet, mit der der Verrastungsarm 75 auf den Verrastungsvorsprung elastisch aufschnappt und diesen hintergreift.

Es ist besonders vorteilhaft, den Verrastungsvorsprung durch ein zusätzliches zapfenförmiges Bauteil 82, insbesondere eine Kugel, zu bilden, das in einem vorzugsweise runden und radial durchgehenden Aufnahmeloch 83 im anderen Steckverbindungsteil sitzt, und dessen radiale Abmessung so groß ist, dass es die Innenmantelfläche des Hülsenlochs 74 radial nach innen überragt und in eine Ausnehmung 84 in der Außenmantelfläche der Lagerhülse 73 einfasst. Hierdurch ist die Lagerhülse 73 formschlüssig mit dem vorderen Hülsenansatz 80 des vorderen Handstückabschnitts 3b verbunden und sowohl in Umfangsrichtung als auch in Axialrichtung fixiert. Die Ausnehmung 84 ist vorzugsweise durch eine kegelförmige Einsenkung gebildet, wobei das vorzugsweise durch eine Kugel gebildete runde Bauteil 82 an der Kegelfläche der Einsenkung anliegt und im Grund der Einsenkung Freiraum hat.

Es ist auch für die Verrastungsausnehmung 81 vorteilhaft, sie durch eine kegelförmige Einsenkung zu bilden, so dass das vorzugsweise durch eine Kugel gebildete runde Bauteil 82 auch an den Kegelflächen dieser Einsenkung anliegt. Wegen der verhältnismäßig geringen Dicke des flachen Verrastungsarms 75 kann diese Einsenkung an der Außenseite des Verrastungsarms 75 auslaufen.

Die Ausbildung des Verrastungsarms 75 am Basisring 78 hat den Vorteil, dass diese Teile einteilig aus elastisch biegsamen Metall, insbesondere Federstahl hergestellt werden können und der Träger des Basisrings 78, hier der Hülsenansatz 77, nicht aus elastischem Metall bzw. Federstahl hergestellt werden muss.

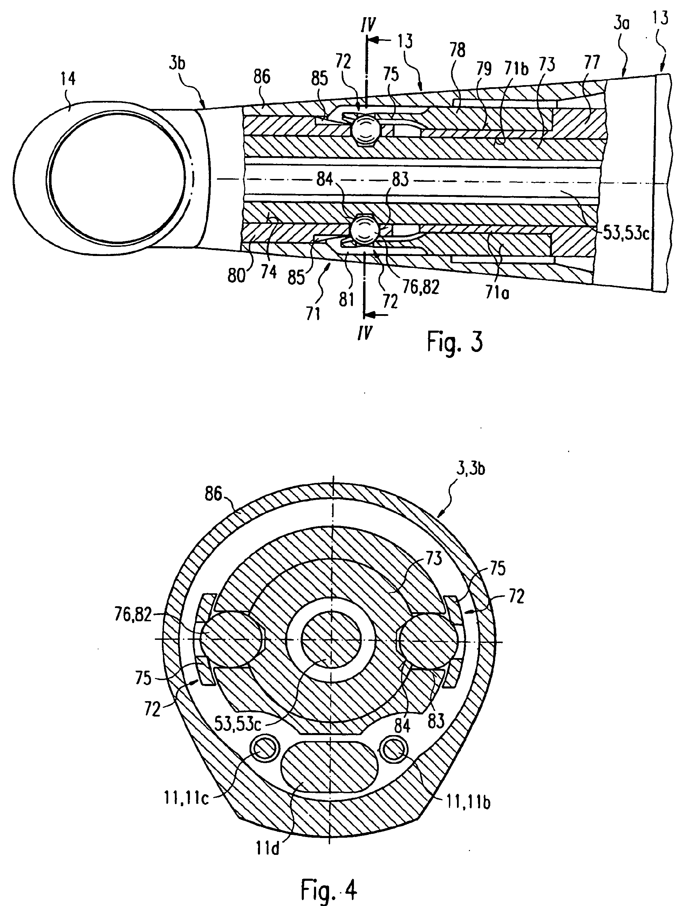

Wie sich insbesondere aus Fig. 3 deutlich entnehmen lässt, ermöglicht die sich vom Hülsenansatz 77 nach vorne erstreckende Ausgestaltung des Verrastungsarms 77 eine kleine Baugröße in der Querrichtung des vorderen Handstückabschnitts 13b, was durch die außenseitige Verjüngung des Verrastungsarms 75 bezüglich seines Trägers, hier des Basisrings 78 bzw. des Hülsenansatzes 77, bedingt ist. Vorzugsweise ist dadurch bedingt, dass der Verrastungsarm 75 radial nach innen versetzt angeordnet werden kann, so dass auch die Außenkontur des vorderen Handstückabschnitts 3b mit einer entsprechend geringeren Querschnittsgröße ausgebildet werden kann. Hierbei ist zu berücksichtigen, dass im Bereich der Behandlungsstelle, hier im Mundraum eines Patienten, wenig Raum zur Verfügung steht und deshalb jede Querschnittsverringerung von großer Bedeutung ist.

Eine weitere Querschnittsverringerung lässt sich dadurch erreichen, dass der Verrastungsarm 75 in eine außenseitige Ausnehmung 85, z.B. eine Abflachung, des Hülsenansatzes 80 einfasst.

Wie es sich insbesondere aus Fig. 4 entnehmen lässt, wird beim Fehlen von Ausnehmungen 85 eine weitere Querschnittsverringerung dadurch erreicht, dass der im Querschnitt durch eine flache Leiste gebildete Verrastungsarm 75 entsprechend der Krümmung des vorhandenen Umfangs des Hülsenansatzes 80 gekrümmt ist, oder entsprechend firstdachförmig abgewinkelt ist.

Beim Ausführungsbeispiel sind zwei Verrastungsvorrichtungen 72 spiegelbildlich einander diametral gegenüberliegend angeordnet, wodurch sich die Verrastungskräfte verdoppeln lassen und außerdem sich symmetrische Verrastungskräfte ergeben.

Ein Verrastungsvorgang und ein Lösen der Verrastung lassen sich handhabungsfreundlich und schnell durchführen. Zum Verrasten werden die Steckverbindungsteile 71a, 71b in einer Position zusammengesteckt, in der der oder die Verrastungsarme 75 axial mit der Position des zugehörigen Verrastungsvorsprungs übereinstimmen. Die Findung dieser Drehposition lässt sich erleichtern, wenn jeweils dem Verrastungsarm 75 die Ausnehmung 85 zugeordnet ist und das vordere Ende des Verrastungsarms 75 in der radialen Blickrichtung gerundet ist, oder die Ecken des Verrastungsarms 75 abgeschrägt sind. Hierbei erweisen sich die Rundung bzw. die Abschrägungen als Einführungsflächen, die den Verrastungsarm 75 in der richtigen Umfangsposition in die Ausnehmung 85 einführen und positionieren.

Im Übrigen sind beim Ausführungsbeispiel die Hülsenansätze 77, 80 bezüglich der dahinter und davor befindlichen Konfiguration der Handstückabschnitte 3a, 3b auf dem gesamten Umfang verjüngt und von einer Außenhülse 86 umgeben, die an ihrem hinteren und an ihrem vorderen Ende mit der Konfiguration des übrigen hinteren Handstückabschnitts 3a und vorderen Handstückabschnitts 3b in etwa abschließt. Die Außenhülse 86 weist in ihrem hinteren Bereich wenigstens einen, vorzugsweise zwei, nämlich einen hinteren und einen mittleren, Hülsenabschnitte 87, 88 auf, mit dem bzw. denen sie mit geringem Bewegungsspiel auf einem oder zwei passenden Zapfenabschnitten sitzt. Der hintere Hülsenabschnitt 87 ist durch eine Innenquerschnittserweiterung am hinteren Ende der Außenhülse 86 gebildet, die so groß ist, dass eine verjüngte Ringwand im Bereich des Hülsenabschnitts 87 verbleibt. Dieser nach außen verjüngte Hülsenabschnitt sitzt in einer stufenförmigen Ringnut 87a mit einer Stufenfläche 90 am hinteren Handstückabschnitts 3a.

Ein zweiter mittlerer Hülsenabschnitt 88 ist durch einen Bohrungsabschnitt im mittleren Bereich der Außenhülse 86 gebildet, in den das vordere Ende des Hülsenansatzes 77 mit geringem Bewegungsspiel einfasst.

Am vorderen Ende der Außenhülse 86 weist diese einen Hülsenabschnitt 91 und einen Innenquerschnitt auf, der mit geringem Bewegungsspiel auf dem Hülsenansatz 80 sitzt, der unter Bildung einer Stufenfläche 92 bezüglich des vorderen Bereichs des vorderen Handstückabschnitts 3b verjüngt ist. Die Längenabmessungen der Außenhülse 86, der Hülsenansätze 77, 80 und der Hülsenabschnitte 87, 88, 91 sind so ausgebildet, dass im zusammengesetzten Zustand der Steckverbindung 71 der vordere und hintere Rand der Außenhülse 86 an den Stufenflächen 90, 92 anliegt, wodurch der von der Außenhülse 86 umgebende Innenraum dicht abgedeckt ist.

Die Außenhülse 86 ist durch eine Drehsperrvorrichtung 95 gegen ein Verdrehen positioniert. Die Drehsperrvorrichtung kann zwischen der Außenhülse 86 und dem hinteren Handstückabschnitt 3a oder dem vorderen Handstückabschnitt 3b, insbesondere den Hülsenansätzen 77, 80 angeordnet sein. Beim Ausführungsbeispiel ist die Drehsperrvorrichtung 95 zwischen der Außenhülse 86 und dem Hülsenansatz 77 oder dem Basisring 78 angeordnet, wobei sie im montierten Zustand unter der Außenhülse 86 geschützt angeordnet ist. Sie kann durch einen Sperrzapfen 96 gebildet sein, der in passende Ausnehmungen 97, 98 in der Außenmantelfläche des Hülsenansatzes 77 und in der Innenmantelfläche der Außenhülse 86 einfasst, wobei eine der Ausnehmungen entgegen der Steckrichtung am zugehörigen Bauteil in Form einer Rinne ausläuft, wodurch die axiale Montage der Außenhülse 86 möglich ist.

Beim Ausführungsbeispiel ist der Sperrzapfen 96 durch eine Kugel gebildet, wobei die Ausnehmung 97 durch eine Kalotte gebildet ist und die Ausnehmung 98 in der Außenhülse 86 durch eine längsverlaufende und nach hinten auslaufende Rinne gebildet ist, so dass die Außenhülse 86 von vorne auf den Hülsenansatz 77 aufschiebbar ist, bzw. der hintere Handstückabschnitt 3a in die auf den Hülsenabschnitt 80 aufgeschobene Außenhülse 86 einschiebbar ist, wobei die Verrastung gleichzeitig und selbsttätig erfolgt. Zum Lösen werden die Handstückabschnitte 3a, 3b mit einer manuellen Zugkraft auseinandergezogen, wobei der Verrastungsarm 75 selbsttätig ausfedert und löst.

Für ein Lösen der Verbindungsvorrichtung am Behandlungsort, z. B. durch den Zahnarzt ist die Verrastungskraft nur so groß bemessen, daß die wenigstens eine Verrastungsvorrichtung 72 durch manuelles Zusammenschieben bzw. Auseinanderziehen der Verbindungsteile überdrückbar und somit verrastbar bzw. entrastbar ist. Soll dagegen ein Lösen am Behandlungsort, z. B. in einer Praxis, z. B. aus Sicherheitsgründen, nicht möglich sein, ist die Verrastungskraft so viel größer bemessen, daß ein Verbinden bzw. Lösen nur mit Hilfswerkzeugen, insbesondere in einer Werkstatt, durchgeführt werden kann.

Die Medienleitungen 11b, 11c und der Lichtleiter 11d erstrecken sich im Bereich zwischen dem hinteren Ende des hinteren Handstückabschnitts 3a und dem vorderen Handstückabschnitt 3b durchgehend, wobei sie in zugehörigen Rinnen 101a, 101b, 102 im Tragkörper 68 und/oder Basisring 78 und/oder im Hülsenansatz 80 verlaufen und durch kleine Röhrchen gebildet sein können, die jeweils durch eine Steckverbindung 103 mit dem hinteren Endbereich des Handstücks 3 bzw. dem vorderen Handstückabschnitt 3b verbunden und abgedichtet sind. Die Steckverbindungen 103 sind jeweils durch eine vorzugsweise zylindrische Steckausnehmung 104 im Handstück 3 und einen darin dicht einsteckbaren Steckzapfen 105 gebildet, der dicht mit der zugehörigen Medienleitung 11b, 11c verbunden ist, einen axialen Durchgangskanal 106 aufweist und durch eine Ringdichtung 107 in der Steckausnehmung 104 abgedichtet ist, die durch einen Dichtring gebildet ist, der in einer Außenringnut im Steckzapfen 105 oder in einer Innenringnut in der Steckausnehmung 104 sitzt und der jeweils die anliegende Innenmantelfläche der Steckausnehmung 104 oder die Außenmantelfläche des Steckzapfens 105 abdichtet. Zur Verbindung mit der Medienleitung 11b, 11c kann sich vom Steckzapfen 105 eine Verbindungshülse 108 erstrecken, auf die oder in die die Medienleitung 11b, 11c geschoben ist und abgedichtet ist, z.B. durch ein Dichtungsmittel wie ein Kleber oder durch einen Presssitz. Zur Montage dieser Leitungsverbindung ist es lediglich erforderlich, den Steckzapfen 105 mit der Medienleitung zu verbinden und in die Steckausnehmung 104 einzustecken oder umgekehrt. Insbesondere im Bereich der hinteren Enden der Medienleitungen 11b, 11c ist es vorteilhaft, die Steckausnehmungen 104 nach vorne jeweils an einer quer, insbesondere etwa rechtwinklig zur Mittelachse des hinteren Handstückabschnitts 13a verlaufenden Stirnflächenabschnitt 109 ausmünden zu lassen, so dass die sich etwa achsparallel erstreckenden Medienleitungen ohne Biegung montiert werden können, bzw. angeordnet sind. Die Steckausnehmungen 104 sind jeweils durch einen Querkanal 111a, 111b mit der zugehörigen Ringnut 12a, 12b verbunden, die einen axialen Abstand voneinander aufweisen. Auf diese Weise ist im Funktionsbetrieb des Handinstruments 1 der Z-förmige Durchfluss des bzw. der Medien durch die hohlzylindrische Teilungsfuge der Steck/Dreh-Kupplung 4 gewährleistet.

Um in dem oder den Medien enthaltene Verunreinigungen in Form von kleinen Partikeln vor einem Strömungstransport zur zugehörigen Auslassöffnung 11a bzw. - düse zu schützen, ist im hinteren Bereich des Handstücks in der wenigstens einen Medienleitung 11, hier in der Wasserleitung 11c, eine Reinigungsvorrichtung 115 angeordnet, die durch die bezüglich dem zugehörigen Steckzapfen 105 verlängerte Steckausnehmung 104 und eine Reinigungspatrone 116 gebildet ist, die in den verlängerten Bereich der Steckausnehmung 104 von der dem zugehörigen Steckzapfen 105 abgewandten Seite her, hier von hinten, in die Steckausnehmung 104 lösbar abgedichtet eingesteckt bzw. einsteckbar ist.

Da der Anschluss des Schlauches oder des Röhrchens der zugehörigen Medienleitung 11 bzw. 11c auch anders als im Sinne der Steckverbindung 103 ausgebildet sein kann, z.B. mit einem einschraubbaren Anschlussstutzen, wird im folgenden der verlängerte Bereich der Steckausnehmung 104 in den die Patrone 116 einsetzbar ist, mit dem Bezugszeichen 117 bezeichnet. Zur axialen Fixierung der Patrone 116 in der Steckausnehmung 117 ist beim Ausführungsbeispiel eine Gewindeverbindung 118 vorgesehen, mit einem Innengewinde 118a in einem erweiterten Wandabschnitt der Steckausnehmung 117 und einem Außengewinde 118b auf der Patrone 116. Die Gewindeverbindung 118 ist vorzugsweise im hinteren Bereich der Patrone 116 bzw. der Steckausnehmung 117 angeordnet, wobei die Gewindeverbindung 118 vorzugsweise vor einem hinteren Dichtungsabschnitt 119 angeordnet ist. Im Bereich des Dichtungsabschnitts 119 ist ein Dichtring 119a vorgesehen, der vorzugsweise im mittleren Bereich des Dichtungsabschnitts 119 angeordnet ist und in einer Ringnut sitzt, die in der zylindrischen Mantelfläche des Dichtungsabschnitts 119 der Patrone 116 oder in der hohlzylindrischen Innenmantelfläche des Dichtungsabschnitts 119 der Steckausnehmung 117 angeordnet ist.

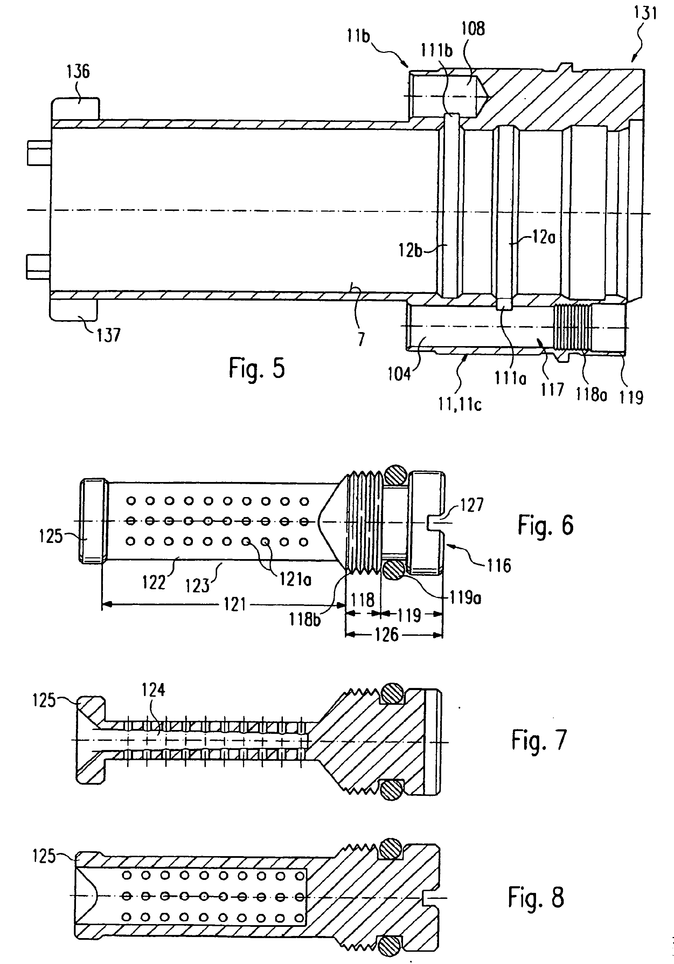

Wie insbesondere Fig. 5 bis Fig. 8 zeigen, weist die Patrone 116 einen sich längs erstreckenden Reinigungsabschnitt 121 auf, der größer bemessen ist, als die Querschnittsgröße der Patrone 116 und der vom zu reinigenden Medium quer zur Längsrichtung der Patrone 116 durchströmt wird. Hierdurch lässt sich ein großer Reinigungsquerschnitt (Durchströmungsfläche) erreichen. Der Reinigungsabschnitt 121 kann einen Filter oder ein Sieb aufweisen. Beim Ausführungsbeispiel ist der Reinigungsabschnitt 121 durch einen im Querschnitt verjüngten Hülsenabschnitt 122 gebildet, dessen Wandung eine Vielzahl kleiner Sieblöcher 121a aufweist, die der Reinigung des Mediumstromes dienen, wenn dieser aus dem Freiraum 123 außerhalb des verjüngten Hülsenabschnitts 122 in den im Hülsenabschnitt 122 axial verlaufenden Kanal 124 strömt. Der Freiraum 123 ist vorzugsweise ringförmig ausgebildet. Die Querschnittsform des Hülsenabschnitts 122 kann rund sein. Beim Ausführungsbeispiel weist der Hülsenabschnitt 122 eine flache Querschnittsform auf. Hierdurch wird die Oberfläche bzw. Wandungsfläche des Hülsenabschnitts 122 vergrößert, so dass eine größere Anzahl der Sieblöcher 121a realisiert werden können und deshalb die beim Durchströmen des Hülsenabschnitts 122 stattfindende Drosselung gering gehalten werden kann. Dies wird durch den verhältnismäßig großen Durchströmungsquerschnitt erreicht.

Zur Abdichtung des wenigstens einen Freiraums 123 weist die Patrone 116 einen den Freiraum 123 nach vorne begrenzenden Flansch 125 auf, der sich mit geringem Bewegungsspiel bis zur Innenmantelfläche der Steckausnehmung 117 erstreckt und dadurch eine Abdichtung bildet. Die Patrone 116 besteht somit aus dem Flansch 125, dem sich davon nach hinten erstreckenden verjüngten Hülsenabschnitt 122 und einem rückseitigen wieder verdickten Basisabschnitt 126, in dessen Bereich der Gewindeverbindungsabschnitt 118 und der Dichtungsabschnitt 119 angeordnet sind und der an seiner Rückseite ein Angriffselement 127 zum Ein- und Ausschrauben der Patrone 116 aufweist. Das Angriffselement 127 kann z.B. durch einen Schlitz für einen Schraubendreher gebildet sein.

Beim Ausführungsbeispiel ist das Kupplungselement der Steck/Drehkupplung 4, hier die Kupplungsausnehmung 7, in einem Einsatzstück 131 angeordnet, das von hinten in eine passende Steckausnehmung 132 im Handstück eingesetzt und durch eine Fixiervorrichtung 133 fixiert ist. Das Einsatzstück 131 befindet sich im hinteren Bereich des Handstücks 3 und schließt in etwa mit dessen Rückseite ab. Die Fixierung kann durch eine Schraubhülse 134 erfolgen, die von hinten zwischen das Einsatzstück 131 und die es umgebende Ringwand 135 des Handsktücks 3 in die Ringwand 135 eingeschraubt ist und das Einsatzstück 131 gegen ein Herausziehen nach hinten fixiert.

Insbesondere im hinteren Bereich weist das Einsatzstück 131 eine Wandstärke, hier eine Ringwand, auf, die radial größer ist, als die Steckausnehmung 104 bzw. 117, so daß diese darin in etwa achsparalleler Anordnung angeordnet werden kann. Im vorderen Bereich kann das Einsatzstück 131 verjüngt sein und einen Flansch 136 zur Zentrierung in der Steckausnehmung 132 aufweisen. Hierdurch ist Platz für die wenigstens eine Medienleitung 11c geschaffen, wobei im Flansch 136 wenigstens eine Durchgangsöffnung 137 für die wenigstens eine Medienleitung aufweist. Die Schraubhülse 134 weist an ihrem hinteren Ende ein von hinten zugängliches, nicht dargestelltes Drehangriffselement für ein Werkzeug zum Ein- und Ausschrauben auf.

Die Patrone 116 besteht vorzugsweise aus Kunststoff, wobei es sich insbesondere um ein Spritzgießteil handelt, das trotz seiner komplizierten Form einfach und schnell und somit kostengünstig durch Spritzgießen hergestellt werden kann.

Die Patrone 116 befindet sich in einer handhabungsfreundlichen Position. Sie kann handhabungsfreundlich und schnell aus- und eingeschraubt werden, z.B. gegen eine neue Patrone 116 ausgetauscht werden. Auch eine Reinigungskontrolle durch ein Aus-und Einschrauben der Patrone 116 lässt sich einfach und schnell durchführen. Da die Patrone 116 von hinten zugänglich ist, ist sie von der Seite des Handstücks 3 her nicht sichtbar und geschützt angeordnet. Eine besondere Abdeckung ist nicht erforderlich. Das Aussehen des Handstücks 3 wird deshalb durch das Vorhandensein der Patrone 116 nicht beeinträchtigt.

## Patentansprüche

1. Medizinisches oder dentalmedizinisches Handstück (3), das an seinem hinteren Ende ein Kupplungselement (7) zum Ankuppeln an ein passendes Kupplungselement (8) einer flexiblen Versorgungsleitung (2a) aufweist, und in seinem vorderen Bereich eine Haltevorrichtung (5) für ein Werkzeug aufweist, wobei das Handstück (3) aus einem hinteren und einem vorderen Handstückabschnitt (3a, 3b) besteht, die durch eine Steckverbindung (71) miteinander verbunden sind und durch eine Verrastungsvorrichtung (72) aneinander fixiert sind, die einen sich etwa achsenparallel erstreckenden und quer elastisch biegbaren Verrastungsarm (75) aufweist, der an einem Steckverbindungsteil (77) angeordnet ist und in seinem freien Endbereich mit einem am anderen Steckverbindungsteil (80) angeordneten Verrastungselement (76) verrastet ist,
und wobei das Handstück ferner ein Einsatzteil (73) in Form einer Lagerhülse aufweist, welche in einer Steckausnehmung (71c, 74) des einen und/oder des anderen Steckverbindungsteils sitzt und durch die sich eine Antriebswelle (53, 53c) erstreckt, welche in endseitig in der Lagerhülse angeordneten Lagern (63, 64) drehbar gelagert ist,
**dadurch gekennzeichnet,**
**dass** die Verrastungsvorrichtung (72) zugleich auch die Lagerhülse-axial fixiert.

2. Handstück nach Anspruch 1,
**dadurch gekennzeichnet,**
**dass** der Vertastungsarm (75) die Querschnittsform eines flachen Stabes aufweist.

3. Handstück nach Anspruch 1 oder 2,
**dadurch gekennzeichnet,**
**dass** der Verrastungsarm (75) am hinteren Steckverbindungsteit angeordnet ist und sich nach vorne erstreckt.

4. Handstück nach Anspruch 3,
**dadurch gekennzeichnet,**
**dass** der Verrastungsarm (75) konvergent ausgebildet ist.

5. Handstück nach einem der vorherigen Ansprüche,
**dadurch gekennzeichnet,**
**dass** die Steckverbindungsteile durch ein sich vom hinteren Handstückabschnitt (13a) nach vorne erstreckenden Hülsenansatz (77) und ein sich vom vorderen Handstückabschnitt (13b) nach hinten erstreckenden Hülsenabschnitt (80) gebildet sind, die vorzugsweise nebeneinander angeordnet sind und mit geringem Bewegungsspiel auf dem Einsatzteil (73) sitzen.

6. Handstück nach einem der vorherigen Ansprüche,
**dadurch gekennzeichnet,**
**dass** das Verrastungselement (76) durch einen Zapfen (82) oder eine Kugel gebildet ist, die in einem Loch (83) des zugehörigen Steckverbindungsteils, insbesondere des vorderen Hülsenansatzes (80) sitzt.

7. Handstück nach Anspruch 6,
**dadurch gekennzeichnet,**
**dass** der Zapfen (82) oder die Kugel den Hülsenansatz (80) nach innen überragt und in eine Ausnehmung (84) des Einsatzteils (73) einfasst.

8. Handstück nach einem der vorherigen Ansprüche,
**dadurch gekennzeichnet,**
**dass** mehrere Verrastungsvorrichtungen (72) einander gegenüberliegend vorgesehen sind.

## Claims

1. A medical or dental-medical handpiece (3), which has at its rearward end a coupling element (7) for coupling to a matching coupling element (8) of a flexible supply line (2a), and has in its forward region a holding device (5) for a tool,
wherein the handpiece (3) consists of a rearward and a forward handpiece section (3a, 3b) connected together by means of a plug connection (71) and fixed together by means of a latching device (72) which has a transversely elastically bendable latching arm (75) extending in a substantially axially parallel manner that is arranged on one plug-connection portion (77) and is latched in its free end region with a latching element (76) arranged *[on the]* other plug-connection portion (80),
and wherein the handpiece has, furthermore, an insert portion (73) in the form of a bearing sleeve which sits in a plug recess (71c, 74) of the one and/or the other plug-connection portion and through which there extends a drive shaft (53, 53c) which is rotatably mounted in bearings (63, 64) arranged at the ends of the bearing sleeve,
**characterised in that**
the latching device (72) at the same time also axially fixes the bearing sleeve.

2. A handpiece according to claim 1,
**characterised in that**
the latching arm (75) has the cross-sectional form of a flat bar.

3. A handpiece according to claim 1 or 2,
**characterised in that**
the latching arm (75) is arranged on the rearward plug-connection portion and extends forwards.

4. A handpiece according to claim 3,
**characterised in that**
the latching arm (75) is formed in a convergent manner.

5. A handpiece according to one of the previous claims,
**characterised in that**
the plug-connection portions are formed by a sleeve extension (77) extending forwardly from the rearward handpiece section (13a) and a sleeve section (80) extending rearwardly from the forward handpiece section (13b), which extension (77) and section (80) are preferably arranged next to one another and sit with little movement clearance on the insert portion (73).

6. A handpiece according to one of the previous claims,
**characterised in that**
the latching element (76) is formed by a pin (82) or a sphere that sits in a hole (83) of the associated plug-connection portion, in particular the forward sleeve extension (80).

7. A handpiece according to claim 6,
**characterised in that**
the pin (82) or the sphere projects inwards over the sleeve extension (80) and grips in a recess (84) of the insert portion (73).

8. A handpiece according to one of the previous claims,
**characterised in that**
a plurality of latching devices (72) are provided lying opposite each other.

## Revendications

1. Pièce à main médicale ou dentaire (3) qui présente à son extrémité arrière, un élément de couplage (7) pour être couplé à un élément de couplage adapté (8) d'un câble d'alimentation flexible (2a), et dans sa zone avant, un dispositif de retenue (5) pour un outil, la pièce à main (3) étant constituée d'une section de pièce à main arrière et avant (3a, 3b) qui sont reliées l'une à l'autre par un assemblage à emboîtement (71) et sont fixées l'une à l'autre par un dispositif à encliquetage (72), qui présente un bras d'encliquetage (75) s'étendant à peu près de façon parallèle à l'axe et pouvant être courbé élastiquement sur le plan perpendiculaire, qui est disposé sur un élément d'assemblage à emboîtement (77) et est encliqueté dans sa région terminale libre avec un autre élément d'encliquetage (76) disposé sur l'élément d'assemblage à emboîtement (80),
et la pièce à main présentant en outre un élément d'appui (73) sous la forme d'une gaine de palier qui se trouve dans une cavité d'emboîtement (71 c, 74) de l'un et/ou de l'autre élément d'assemblage à emboîtement et au travers de laquelle s'étend un arbre de transmission (53, 53c) qui est placé de façon à pouvoir tourner du côté terminal dans les paliers disposés dans la gaine de palier (63, 64),
**caractérisée en ce**
**que** le dispositif d'encliquetage (72) fixe en même temps également la gaine de palier.

2. Pièce à main selon la revendication 1,
**caractérisée en ce**
**que** le bras d'encliquetage (75) présente la forme transversale d'une tige plate.

3. Pièce à main selon la revendication 1 ou 2,
**caractérisée en ce**
**que** le bras d'encliquetage (75) est disposé sur la partie arrière de l'assemblage à emboîtement et s'étend vers l'avant.

4. Pièce à main selon la revendication 3,
**caractérisée en ce**
**que** le bras d'encliquetage (75) est formé de façon convergente.

5. Pièce à main selon l'une quelconque des revendications précédentes,
**caractérisée en ce**
**que** les éléments d'assemblage à emboîtement sont formés par une section de gaine (77) s'étendant de l'arrière de la section de pièce à main (13a) vers l'avant et une section de gaine (80) s'étendant de l'avant de la section de pièce à main (13b) vers l'arrière, qui sont disposés de préférence côte à côte et reposent avec un faible jeu sur l'élément d'appui (73).

6. Pièce à main selon l'une quelconque des revendications précédentes,
**caractérisée en ce**
**que** l'élément d'encliquetage (76) est formé par un tenon (82) ou une bille qui se trouve dans un trou (83) de l'élément d'assemblage à emboîtement, en particulier de l'avant de la section de gaine (80).

7. Pièce à main selon la revendication 6,
**caractérisée en ce**
**que** le tenon (82) ou la bille dépasse de la section de gaine (80) vers l'intérieur et s'enchâsse dans un évidement (84) de l'élément d'appui (73).

8. Pièce à main selon l'une quelconque des revendications précédentes,
**caractérisé en ce**
**que** plusieurs dispositifs d'encliquetage (72) superposés sont prévus.
